# EUROPEAN PATENT SPECIFICATION

(11) **EP 3 973 025 B1**
(45) Date of publication and mention of the grant of the patent: **22.11.2023**
(21) Application number: 19929205.3
(22) Date of filing: 21.05.2019
(51) Int. Cl.: C09D 183/05, C09D 183/07

(54) **POLYORGANOSILOXANE RELEASE COATING AND ITS PREPARATION AND USE**
POLYORGANOSILOXANFREISETZENDE BESCHICHTUNG SOWIE IHRE HERSTELLUNG UND VERWENDUNG
REVÊTEMENT À LIBÉRATION DE POLYORGANOSILOXANE ET SA PRÉPARATION ET SON UTILISATION

(43) Date of publication of application: 30.03.2022
(73) Proprietor: Dow Silicones Corporation, Midland, MI 48686-0994 (US); Dow Toray Co., Ltd., Tokyo 140-8617 (JP)
(72) Inventor: HUANG, Fuming, Shanghai 201203 (CN); TANAKA, Hidefumi, Chiba 2990108 (JP); NISHIJIMA, Kazuhiro, Chiba 2990108 (JP); ZHANG, Shenglan, Shanghai 201203 (CN); LIU, Zhihua, Shanghai 201203 (CN)
(74) Representative: Murgitroyd & Company
(86) International application number: PCT/CN2019/087778
(87) International publication number: WO 2020/232629

(56) References cited:
- EP-A1- 2 385 084
- WO-A1-2018/112911
- WO-A1-2018/170372
- US-A- 5 273 946

## Description

### CROSS REFERENCE TO RELATED APPLICATIONS

### None.

### TECHNICAL FIELD

A silicone release coating composition can be coated on a substrate such as a plastic film or paper and cured via hydrosilylation reaction to form a release liner. The silicone release coating composition may provide one or more benefits over release liners known in the art, such as lower release force and/or good subsequent adhesion strength and/or low migration (to an adhesive adhered to the release liner and/or to the backside of the substrate). The release liner is useful in applications such as electronic device application (e.g., touch panels) for tape release, label release and/or adhesive transfer film.

### BACKGROUND

Silicone release coatings are useful in applications where relatively non-adhesive surfaces are required. Single sided liners, such as backing papers for pressure sensitive adhesive labels, are usually adapted to temporarily retain the labels without affecting the adhesive properties of the labels. Double sided liners, such as interleaving papers for double sided and transfer tapes, are used to protect the self-adhesive tapes.

Document WO 2018/112911 A describes a curable silicone release coating composition used to be applied onto a substrate in order to form a release liner having low release force and good subsequent adhesion strength. The composition comprises a branched organopolysiloxane comprising alkenyl groups, a silsesquioxane comprising alkenyl groups, an organopolysiloxane comprising SiH groups as crosslinker, a hydrosilylation Pt catalyst, an inhibitor, optionally 0-50 parts by weight of an organopolysiloxane comprising alkenyl groups, such as a linear organopolysiloxane comprising aryl groups and 0.05-0.90% of alkenyl groups. The composition may further comprise an anchorage additive and an organic solvent.

Document WO 2018/170372 A is directed to a curable silicone release coating composition used to be applied onto a substrate in order to form a release liner for PSA labels ehibiting good curing properties. The composition comprises a branched organopolysiloxane comprising alkenyl groups, an organopolysiloxane comprising SiH groups as crosslinker, a hydrosilylation Pt catalyst, a maleimide compound as first inhibitor and an acetylenic compound as second inhibitor.

Document EP 2 385 084 A describes a silicone composition used for release paper having improved adhesion to paper without affecting the release properties. The composition comprises a branched or linear organopolysiloxane comprising alkenyl groups, 0.1-10 parts by weight of an adhesion promoter which is an organopolysiloxane comprising an alkenyl content of 0.3-2.0 mol/100g, an organopolysiloxane comprising SiH groups as crosslinker, a hydrosilylation Pt catalyst and optionally an organic solvent.

Finally, document US 5 273 946 A describes a curable silicone composition used for the treatment of substrates such as paper. The composition comprises a linear organopolysiloxane comprising alkenyl groups, a linear organopolysiloxane comprising SiH groups and a Pt hydrosilylation catalyst. The composition may further comprise a branched organopolysiloxane comprising alkenyl groups used to modify the release characteristics of the cured composition.

Known silicone release coatings suffer from the drawback that if a release coating composition is formulated to have desirable ultra-low release force, the coating may suffer from migration.

### SUMMARY

A curable polyorganosiloxane release coating composition (composition) comprises:
A) a branched aliphatically unsaturated polyorganosiloxane
B) a crosslinker having at least 3 silicon bonded hydrogen atoms per molecule,
C) a hydrosilylation reaction catalyst,
D) a hydrosilylation reaction inhibitor, and
E) an aryl-functional polydiorganosiloxane having an aliphatically unsaturated group.

The release coating composition can be coated on a surface of a substrate and cured via hydrosilylation reaction to prepare a release liner.

### BRIEF DESCRIPTION OF THE DRAWINGS

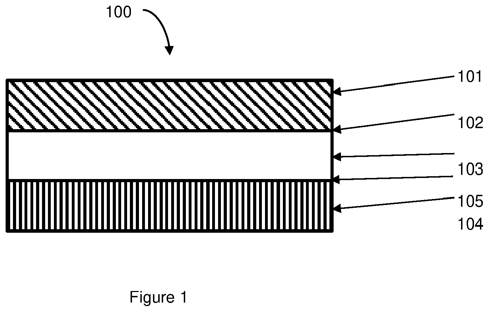

Figure 1 shows a partial cross section of a release liner 100. The release liner comprises a release coating 101 prepared by curing the composition described above on a first surface 102 of a film substrate 103. The release liner 100 further includes a carrier 104 mounted to an opposing surface 105 of the film substrate 103.

### DETAILED DESCRIPTION OF THE INVENTION

A curable polyorganosiloxane release coating composition (composition) comprises:
A) a branched aliphatically unsaturated polyorganosiloxane
B) a crosslinker having at least 3 silicon bonded hydrogen atoms per molecule,
C) a hydrosilylation reaction catalyst,
D) a hydrosilylation reaction inhibitor, and
E) an aryl-functional polydiorganosiloxane having an aliphatically unsaturated group.

The release coating composition may optionally further comprise one or more additional starting materials selected from: F) an anchorage additive, G) a solvent, and H) an anti-mist additive.

### A) Branched Aliphatically Unsaturated Polyorganosiloxane

In the curable polyorganosiloxane release coating composition, starting material A) is a branched aliphatically unsaturated polyorganosiloxane. The branched aliphatically unsaturated polyorganosiloxane may be selected from the group consisting of (A-1) Q-branched polyorganosiloxanes, (A-2) silsesquioxanes, and (A-3) a combination of both (A-1) and (A-2).

The Q-branched polyorganosiloxane has unit formula (A-I): (R¹₃SiO_{1/2})ₐ(R²R¹₂SiO_{1/2})_{b}(R¹₂SiO_{2/2})_{c}(SiO_{4/2})_{d}, where each R¹ is independently a monovalent hydrocarbon group free of aliphatic unsaturation or a monovalent halogenated hydrocarbon group free of aliphatic unsaturation and each R² is an aliphatically unsaturated monovalent hydrocarbon group, subscript a ≥ 0, subscript b > 0, 15 ≥ c ≥ 995, and subscript d is > 0.

The monovalent hydrocarbon group for R¹ is exemplified by an alkyl group of 1 to 6 carbon atoms, an aryl group of 6 to 10 carbon atoms, a halogenated alkyl group of 1 to 6 carbon atoms, or a halogenated aryl group of 6 to 10 carbon atoms. Suitable alkyl groups for R¹ are exemplified by, but not limited to, methyl, ethyl, propyl (*e.g.,* iso-propyl and/or n-propyl), butyl (*e.g.,* isobutyl, n-butyl, tert-butyl, and/or sec-butyl), pentyl (*e*.*g*., isopentyl, neopentyl, and/or tert-pentyl), hexyl, as well as branched saturated hydrocarbon groups of 6 carbon atoms. Suitable aryl groups for R¹ are exemplified by, but not limited to, phenyl, tolyl, xylyl, naphthyl, benzyl, and dimethyl phenyl. Suitable halogenated alkyl groups for R¹ are exemplified by, but not limited to, the alkyl groups described above where one or more hydrogen atoms is replaced with a halogen atom, such as F or Cl. For example, fluoromethyl, 2-fluoropropyl, 3,3,3-trifluoropropyl, 4,4,4-trifluorobutyl, 4,4,4,3,3-pentafluorobutyl, 5,5,5,4,4,3,3-heptafluoropentyl, 6,6,6,5,5,4,4,3,3-nonafluorohexyl, and 8,8,8,7,7-pentafluorooctyl, 2,2-difluorocyclopropyl, 2,3-difluorocyclobutyl, 3,4-difluorocyclohexyl, and 3,4-difluoro-5-methylcycloheptyl, chloromethyl, chloropropyl, 2-dichlorocyclopropyl, and 2,3-dichlorocyclopentyl are examples of suitable halogenated alkyl groups. Suitable halogenated aryl groups for R¹ are exemplified by, but not limited to, the aryl groups described above where one or more hydrogen atoms is replaced with a halogen atom, such as F or Cl. For example, chlorobenzyl and fluorobenzyl are suitable halogenated aryl groups. Alternatively, each R¹ is independently a monovalent hydrocarbon group free of aliphatic unsaturation. Alternatively, each R¹ is an alkyl group. Alternatively, each R¹ is independently methyl, ethyl or propyl. Each instance of R¹ may be the same or different. Alternatively, each R¹ is a methyl group.

The aliphatically unsaturated monovalent hydrocarbon group for R² is capable of undergoing hydrosilylation reaction. Suitable aliphatically unsaturated hydrocarbon groups for R² are exemplified by an alkenyl group such as vinyl, allyl, butenyl, and hexenyl; and alkynyl groups such as ethynyl and propynyl. Alternatively, each R² may be vinyl, allyl or hexenyl; and alternatively vinyl or hexenyl. Each instance of R² may be the same or different. Alternatively, each R² is a vinyl group. The subscripts in the unit formula for (A-I) above may have values sufficient that the vinyl content of the branched siloxane for (A-I) may be 0.1% to 1%, alternatively 0.2% to 0.5%, based on the weight of branched siloxane (A-I).

In the unit formula for (A-I), subscript a ≥ 0. Subscript b > 0. Alternatively, subscript b ≥ 3. Subscript c is 15 to 995. Subscript d is > 0. Alternatively, subscript d ≥ 1. Alternatively, for subscript a: 22 ≥ a ≥ 0; alternatively 20 ≥ a ≥ 0; alternatively 15 ≥ a ≥ 0; alternatively 10 ≥ a ≥ 0; and alternatively 5 ≥ a ≥ 0. Alternatively, for subscript b: 22 ≥ b > 0; alternatively 22 ≥ b ≥ 4; alternatively 20 ≥ b > 0; alternatively 15 ≥ b > 1; alternatively 10 ≥ b ≥ 2; and alternatively 15 ≥ b ≥ 4. Alternatively, for subscript c: 800 ≥ c ≥ 15; and alternatively 400 ≥ c ≥ 15. Alternatively, for subscript d: 10 ≥ d > 0; alternatively, 10 ≥ d ≥ 1; alternatively 5 ≥ d > 0; and alternatively d = 1. Alternatively, subscript d is 1 or 2. Alternatively, when subscript d = 1, subscript a may be 0 and subscript b may be 4.

The Q-branched polyorganosiloxane may contain at least two polydiorganosiloxane chains of formula (R¹₂SiO_{2/2})_{y}, where each subscript y is independently 2 to 100. Alternatively, the branched siloxane may comprise at least one unit of formula (SiO_{4/2}) bonded to four polydiorganosiloxane chains of formula (R¹₂SiO_{2/2})_{z'} where each subscript z is independently 1 to 100.

The Q-branched polyorganosiloxane may be one Q-branched polyorganosiloxane or a combination of more than one Q-branched polyorganosiloxane of unit formula (A-I) that differ in one or more properties selected from molecular weight, structure, siloxane units and sequence. Suitable Q-branched polyorganosiloxanes for starting material (A-1) are exemplified by those disclosed in U.S. Patent 6,806,339.

The silsesquioxane has unit formula (A-II): (R¹₃SiO_{1/2})ₑ(R²R¹₂SiO_{1/2})_{f}(R¹₂SiO_{2/2})_{g}(R¹SiO_{3/2})ₕ, where R¹ and R² are as described above, subscript e ≥ 0, subscript f > 0, subscript g is 15 to 995, and subscript h > 0. Subscript e may be 0 to 10. Alternatively, for subscript e: 12 ≥ e ≥ 0; alternatively 10 ≥ e ≥ 0; alternatively 7 ≥ e ≥ 0; alternatively 5 ≥ e ≥ 0; and alternatively 3 ≥ e ≥ 0.
Alternatively, subscript f ≥ 1. Alternatively, subscript f ≥ 3. Alternatively, for subscript f: 12 ≥ f > 0; alternatively 12 ≥ f >_ 3; alternatively 10 ≥ f > 0; alternatively 7 ≥ f > 1; alternatively 5 ≥ f ≥ 2; and alternatively 7 ≥ f ≥ 3. Alternatively, for subscript g: 800 ≥ g ≥ 15; and alternatively 400 ≥ g ≥ 15. Alternatively, subscript h ≥ 1. Alternatively, subscript h is 1 to 10. Alternatively, for subscript h: 10 ≥ h > 0; alternatively 5 ≥ h >0; and alternatively h = 1. Alternatively, subscript h is 1 to 10, alternatively subscript h is 1 or 2. Alternatively, when subscript h = 1, then subscript f may be 3 and subscript e may be 0. The values for subscript f may be sufficient to provide the silsesquioxane of unit formula (A-II) with an alkenyl content of 0.1% to 1%, alternatively 0.2% to 0.6%, based on the weight of the silsesquioxane.

The silsesquioxane may be one silsesquioxane or a combination of more than one silsesquioxane of unit formula (A-II) that differ in one or more properties selected from molecular weight, structure, siloxane units and sequence. Suitable silsesquioxanes for starting material (A-2) are exemplified by those disclosed in U.S. Patent 4,374,967.

### B) Crosslinker

Starting material B) is a crosslinker having an average of at least 3 silicon bonded hydrogen atoms per molecule. The crosslinker may by a polyorganohydrogensiloxane crosslinker of unit formula (B-I): (R¹₃SiO_{1/2})₂(R¹₂SiO_{2/2})ₖ(R¹HSiO_{2/2})ₘ, where R¹ is as described above and subscript k ≥ 0, subscript m > 0, and a quantity (m+ k) is 8 to 400. Subscripts m and k may have values selected such that the polyorganohydrogensiloxane crosslinker has a viscosity of from 5 to 1000 mPa · s at 25°C, alternatively 10 to 350 mPa·s. The amount of starting material B) added to the release coating composition may be 0.5 to 10 parts by weight per 100 parts by weight of starting material A).

Polyorganohydrogensiloxanes for ingredient B) are exemplified by:
B-1) trimethylsiloxy-terminated poly(dimethylsiloxane/methylhydrogensiloxane),
B-2) trimethylsiloxy-terminated polymethylhydrogensiloxane, and
B-3) a combination of B-1) and B-2). The crosslinker may be one polyorganohydrogensiloxane crosslinker or a combination of two or more crosslinkers that differ in one or more properties selected from molecular weight, structure, siloxane units and sequence.

### C) Hydrosilylation Reaction Catalyst

Starting material C) is a hydrosilylation reaction catalyst. The catalyst may be selected from the group consisting of: (C-1) a metal selected from platinum, rhodium, ruthenium, palladium, osmium, and iridium; (C-2) a compound of the metal (C-1), (C-3). a complex of the compound (C-2) with an organopolysiloxane, and (C-4) the compound (C-2) microencapsulated in a matrix or core/shell type structure. Suitable hydrosilylation reaction catalysts are known in the art and are commercially available. Such conventional hydrosilylation catalysts can be (C-1) a metal selected from platinum, rhodium, ruthenium, palladium, osmium, and iridium. Alternatively, the hydrosilylation reaction catalyst may be (C-2) a compound of such a metal, for example, chloridotris(triphenylphosphane)rhodium(I) (Wilkinson's Catalyst), a rhodium diphosphine chelate such as [1,2-bis(diphenylphosphino)ethane]dichlorodirhodium or [1,2-bis(diethylphospino)ethane]dichlorodirhodium, chloroplatinic acid (Speier's Catalyst), chloroplatinic acid hexahydrate, platinum dichloride. Alternatively, the hydrosilylation reaction catalyst may be (C-3) a complex of (C-2) the compound described above with low molecular weight organopolysiloxanes or platinum compounds microencapsulated in a matrix or core/shell type structure. Complexes of platinum with low molecular weight organopolysiloxanes include 1,3-diethenyl-1,1,3,3-tetramethyldisiloxane complexes with platinum (Karstedt's Catalyst). Alternatively, the hydrosilylation reaction catalyst may comprise (C-4) a compound or complex described above microencapsulated in a resin matrix. Exemplary hydrosilylation catalysts are described in U.S. Patents 3,159,601; 3,220,972; 3,296,291; 3,419,593; 3,516,946; 3,814,730; 3,989,668; 4,784,879; 5,036,117; and 5,175,325 and EP 0 347 895 B. Microencapsulated hydrosilylation catalysts and methods of preparing them are known in the art, as exemplified in U.S. Patents 4,766,176 and 5,017,654.

The amount of hydrosilylation reaction catalyst used in the curable polyorganosiloxane release coating composition will depend on various factors including the selection of starting materials A) and B) and their respective contents of silicon bonded hydrogen atoms and aliphatically unsaturated groups, however, the amount of catalyst is sufficient to catalyze hydrosilylation reaction of SiH and aliphatically unsaturated groups, alternatively the amount of catalyst is sufficient to provide 1 ppm to 500 ppm of the platinum group metal based on combined weights of all starting materials in the composition, alternatively 1 ppm to 300 ppm, alternatively 1 ppm to 100 ppm, and alternatively 5 ppm to 100 ppm, on the same basis.

Starting material D) is an inhibitor. The inhibitor may be selected from the group consisting of: (D-1) acetylenic alcohols, (D-2) silylated acetylenic compounds, (D-3) cycloalkenylsiloxanes, (D-4) ene-yne compounds, (D-5) triazoles, (D-6) phosphines, (D-7) mercaptans, (D-8) hydrazines, (D-9) amines, (D-10) fumarates such as dialkyl fumarates, dialkenyl fumarates, or dialkoxyalkyl fumarates, (D-11) maleates, (D-12) nitriles, (D-13) ethers, and (D-14) combinations of two or more of (D-1) to (D-13). Suitable acetylenic alcohols include dimethyl hexynol, and 3,5-dimethyl-1-hexyn-3-ol, 1-butyn-3-ol, 1-propyn-3-ol, 2-methyl-3-butyn-2-ol, 3-methyl-1-butyn-3-ol, 3-methyl-1-pentyn-3-ol, 3-phenyl-1-butyn-3-ol, 4-ethyl-1-octyn-3-ol, 3,5-dimethyl-1-hexyn-3-ol, and 1-ethynyl-1-cyclohexanol, and a combination thereof. Suitable cycloalkenylsiloxanes include methylvinylcyclosiloxanes exemplified by 1,3,5,7-tetramethyl-1,3,5,7-tetravinylcyclotetrasiloxane, 1,3,5,7-tetramethyl-1,3,5,7-tetrahexenylcyclotetrasiloxane, and a combination thereof. Suitable ene-yne compounds include 3-methyl-3-penten-1-yne, 3,5-dimethyl-3-hexen-1-yne. Suitable triazoles include benzotriazole. Suitable amines include tetramethyl ethylenediamine. Suitable fumarates include those disclosed in U.S. Patent 4,774,111. Suitable maleates include diallyl maleate.

Alternatively, the inhibitor may be a silylated acetylenic compound. Without wishing to be bound by theory, it is thought that adding a silylated acetylenic compound reduces yellowing of the reaction product prepared from hydrosilylation reaction of the composition as compared to a reaction product from hydrosilylation of a composition that does not contain a silylated acetylenic compound or that contains an organic acetylenic alcohol stabilizer, such as those described above.

The silylated acetylenic compound is exemplified by (3-methyl-1-butyn-3-oxy)trimethylsilane, ((1,1-dimethyl-2-propynyl)oxy)trimethylsilane, bis(3-methyl-1-butyn-3-oxy)dimethylsilane, bis(3-methyl-1-butyn-3-oxy)silanemethylvinylsilane, bis((1,1-dimethyl-2-propynyl)oxy)dimethylsilane, methyl(tris(1,1-dimethyl-2-propynyloxy))silane, methyl(tris(3-methyl-1-butyn-3-oxy))silane, (3-methyl-1-butyn-3-oxy)dimethylphenylsilane, (3-methyl-1-butyn-3-oxy)dimethylhexenylsilane, (3-methyl-1-butyn-3-oxy)triethylsilane, bis(3-methyl-1-butyn-3-oxy)methyltrifluoropropylsilane, (3,5-dimethyl-1-hexyn-3-oxy)trimethylsilane, (3-phenyl-1-butyn-3-oxy)diphenylmethylsilane, (3-phenyl-1-butyn-3-oxy)dimethylphenylsilane, (3-phenyl-1-butyn-3-oxy)dimethylvinylsilane, (3-phenyl-1-butyn-3-oxy)dimethylhexenylsilane, (cyclohexyl-1-ethyn-1-oxy)dimethylhexenylsilane, (cyclohexyl-1-ethyn-1-oxy)dimethylvinylsilane, (cyclohexyl-1-ethyn-1-oxy)diphenylmethylsilane, (cyclohexyl-1-ethyn-1-oxy)trimethylsilane, and combinations thereof. The silylated acetylenic compound useful as the inhibitor herein may be prepared by methods known in the art, for example, U.S. Patent 6,677,740 discloses silylating an acetylenic alcohol described above by reacting it with a chlorosilane in the presence of an acid receptor.

The amount of inhibitor added to the release coating composition will depend on various factors including the desired pot life of the release coating composition, whether the release coating composition will be a one part composition or a multiple part composition, the particular inhibitor used, and the selection and amount of crosslinker. However, the amount of inhibitor may be 0.001 to 1 parts by weight of inhibitor per 100 parts by weigh of starting material A). Alternatively, the amount of inhibitor may be alternatively 0.001% to 5%, alternatively 0.001 % to 1 %, alternatively 0.01 % to 0.5 %, and alternatively 0.0025 % to 0.025 %, based on the weight of all starting materials in the release coating composition.

### E) Aryl-Functional Polydiorganosiloxane

The aryl-functional polydiorganosiloxane has unit formula (E-1): (R³₃SiO_{1/2})ᵣ(R³₂R⁴SiO_{1/2})ₛ(R³₂R⁵SiO_{1/2})ₜ(R³₂SiO_{2/2})ᵤ(R³R⁴SiO_{2/2})ᵥ (R³R⁵SiO_{2/2})_{w}(R⁴₂SiO_{2/2})ₓ, where each R³ is an independently selected alkyl group, each R⁴ is an independently selected aryl group, each R⁵ is independently selected from the group consisting of alkenyl and alkynyl, subscript r ≥ 0, subscript s ≥ 0, subscript t ≥ 0, subscript u ≥ 0, subscript w ≥ 0, subscript x ≥ 0, a quantity (r+s+t) = 2, a quantity (t+w) > 0 and has a value sufficient to provide the aryl-functional polydiorganosiloxane with the content of aliphatically unsaturated groups of > 0.06% to < 0.24%, a quantity (s+v+x) > 0, and a quantity (r+s+t+u+v+w+x) ≥ 3. Suitable alkyl groups for R³ are exemplified by, but not limited to, methyl, ethyl, propyl (*e.g.,* iso-propyl and/or n-propyl), butyl (*e.g.,* isobutyl, n-butyl, tert-butyl, and/or sec-butyl), pentyl (*e*.*g*., isopentyl, neopentyl, and/or tert-pentyl), hexyl, as well as branched saturated hydrocarbon groups of 6 carbon atoms. Each instance of R³ may be the same or different. Alternatively, each R³ may be methyl.
Suitable aryl groups for R⁴ may have 6 to 10 carbon atoms and are exemplified by, but not limited to, phenyl, tolyl, xylyl, naphthyl, benzyl, and dimethyl phenyl. Each instance of R⁴ may be the same or different. Alternatively, each R⁴ may be phenyl. Suitable aliphatically unsaturated groups for R⁵ are exemplified by an alkenyl group such as vinyl, allyl, butenyl, and hexenyl; and alkynyl groups such as ethynyl and propynyl. Alternatively, each R⁵ may be vinyl, allyl or hexenyl; and alternatively vinyl or hexenyl. Each instance of R⁵ may be the same or different. Alternatively, each R⁵ is a vinyl group.

The content of aliphatically unsaturated groups in the aryl-functional polydiorganosiloxane is > 0.06% to < 0.24%. Alternatively, the content of aliphatically unsaturated groups may be 0.07% to 0.21%, alternatively 0.08% to 0.19%, alternatively 0.09% to 0.16%, alternatively 0.10% to 0.14%, alternatively 0.11% to 0.13%, and alternatively 0.12%. The quantity (t+w) is sufficient to provide this content of aliphatically unsaturated groups to the aryl-functional polydiorganosiloxane.

Alternatively, the aryl-functional polydiorganosiloxane may have unit formula (E-2): (R³₃SiO_{1/2})₂(R³₂SiO_{2/2})ᵤ(R³R⁴SiO_{2/2})ᵥ(R³R⁵SiO_{2/2})_{w}(R⁴₂SiO_{2/2})ₓ, where 0 ≤ u ≤ 1,000, 0 ≤ v ≤ 120, 0 <w ≤ 4, 0 ≤ x ≤ 26, and a quantity (v + x) has a value sufficient to provide the aryl-functional polydiorganosiloxane with the content of aliphatically unsaturated groups of 0.07% to 0.21%, alternatively 0.08% to 0.19%, alternatively 0.09% to 0.16%, alternatively 0.10% to 0.14%, alternatively 0.11% to 0.13%, and alternatively 0.12%.

Examples of aryl-functional polydiorganosiloxanes include trimethylsiloxy-terminated poly(dimethyl/methylphenyl/methylvinyl)siloxane copolymers, trimethylsiloxy-terminated poly(methylphenyl/methylvinyl)siloxane copolymers, trimethylsiloxy-terminated poly(diphenyl/methylvinyl)siloxane copolymers, dimethylvinyl-siloxy-terminated poly(dimethyl/methylphenyl/methylvinyl)siloxane copolymers, dimethylvinyl-siloxy-terminated poly(methylphenyl/methylvinyl)siloxane copolymers, dimethylvinyl-siloxy-terminated poly(diphenyl/methylvinyl)siloxane copolymers, and combinations of two or more thereof. Such aryl-functional polydiorganosiloxanes with methyl,vinyl, and phenyl groups may have viscosity of 500 mPa·s to 60,000 mPa·s, alternatively 600 mPa·s to 10,000 mPa·s, coneplate and alternatively 600 to 8,000 mPa·s, each measured at 25°C by Brookfield Dial Viscometer with cone spindle CP-52. Exemplary polysiloxanes with methyl,vinyl, and phenyl groups are known in the art and are commercially available, e.g., as VPT-1323 from Gelest, Inc. of Morrisville, Pennsylvania, USA. Alternatively, the aryl-functional polydiorganosiloxanes may be synthesized by equilibration processes known in the art, such as that described in U.S. Patent 6,956,087 and U.S. Patent 5,169,920.

The amount of starting material E) the aryl-functional polydiorganosiloxane in the curable polyorganosiloxane release coating composition is > 0 to 1% based on combined weights of starting materials A), B), C), D), and E) in the composition. Alternatively, the amount of starting material E) may be 0.2% to 0.9%, and alternatively 0.4% to 0.8%, on the same basis.

Starting materials A), B), C), D), and E) are present in sufficient amounts to provide an overall molar ratio of aliphatically unsaturated groups to silicon bonded hydrogen atoms (SiH:Vi ratio) of > 1.35:1 to < 1.9:1, alternatively 1.4:1 to 1.8:1, alternatively 1.5:1 to 1.7:1, and alternatively 1.6:1.

The release coating composition may optionally further comprise one or more additional starting materials. The additional starting materials may be selected from the group consisting of: F) an anchorage additive, G) a solvent, and H) an anti-mist additive.

### F) Anchorage Additive

Starting material F) is an anchorage additive. Suitable anchorage additives are exemplified by a reaction product of a vinyl alkoxysilane and an epoxy-functional alkoxysilane; a reaction product of a vinyl acetoxysilane and epoxy-functional alkoxysilane; and a combination (e.g., physical blend and/or a reaction product) of a polyorganosiloxane having at least one aliphatically unsaturated hydrocarbon group and at least one hydrolyzable group per molecule and an epoxy-functional alkoxysilane (e.g., a combination of a hydroxy-terminated, vinyl functional polydimethylsiloxane with glycidoxypropyltrimethoxysilane). Suitable anchorage additives and methods for their preparation are disclosed, for example, in U.S. Patent Application Publication Numbers 2003/0088042, 2004/0254274, and 2005/0038188; and EP 0 556 023. The exact amount of anchorage additive depends on various factors including the type of substrate and whether a primer is used, however, the amount of anchorage additive in the release coating composition may be 0 to 2% based on combined weights of starting materials A), B), C), D), and E), alternatively 0.01 % to 2%, alternatively 0.1% to 1%, alternatively 0.2% to 0.9%, alternatively 0.3% to 0.8%, alternatively 0.4% to 0.7%, and alternatively 0.5% to 0.6%.

### Starting Material G) Solvent

Starting material G) is a solvent. Suitable solvents include, polyalkylsiloxanes, alcohols, ketones, aromatic hydrocarbons, aliphatic hydrocarbons, glycol ethers, tetrahydrofuran, mineral spirits, naphtha, tetrahydrofuran, mineral spirits, naphtha, or a combination thereof. Polyalkylsiloxanes with suitable vapor pressures may be used as the solvent, and these include hexamethyldisiloxane, octamethyltrisiloxane, hexamethylcyclotrisiloxane and other low molecular weight polyalkylsiloxanes, such as 0.5 to 1.5 cSt DOWSIL^{™} 200 Fluids and DOWSIL^{™} OS FLUIDS, which are commercially available from Dow Silicones Corporation of Midland, Michigan, U.S.A.

Alternatively, starting material G) may comprise an organic solvent. The organic solvent can be an alcohol such as methanol, ethanol, isopropanol, butanol, or n-propanol; a ketone such as acetone, methylethyl ketone, or methyl isobutyl ketone; an aromatic hydrocarbon such as benzene, toluene, or xylene; an aliphatic hydrocarbon such as heptane, hexane, or octane; a glycol ether such as propylene glycol methyl ether, dipropylene glycol methyl ether, propylene glycol n-butyl ether, propylene glycol n-propyl ether, or ethylene glycol n-butyl ether, tetrahydrofuran; mineral spirits; naphtha; or a combination thereof.

The amount of solvent will depend on various factors including the type of solvent selected and the amount and type of other starting materials selected for the curable polyorganosiloxane release coating composition. However, the amount of solvent may be 0% to 99%, alternatively 2% to 50%, based on the weight of all starting materials in the release coating composition. The solvent may be added during preparation of the release coating composition, for example, to aid mixing and delivery of one or more starting materials. For example, the catalyst may be delivered in a solvent. All or a portion of the solvent may optionally be removed after the release coating composition is prepared.

### H) Anti-Mist Additive

Starting material H) is an anti-mist additive that may be added to the curable polyorganosiloxane release coating composition to reduce or suppress silicone mist formation in coating processes, particularly with high speed coating equipment. The anti-mist additive may be a reaction product of an organohydrogensilicon compound, an oxyalkylene compound or an organoalkenylsiloxane with at least three silicon bonded alkenyl groups per molecule, and a suitable catalyst. Suitable anti-mist additives for starting material H) are disclosed, for example, in U.S. Patent Application 2011/0287267; U.S. Patent 8,722,153; U.S. Patent 6,586,535; and U.S. Patent 5,625,023.

The amount of anti-mist additive will depend on various factors including the amount and type of other starting materials selected for the release coating composition. However, the amount of anti-mist additive may be 0% to 10%, alternatively 0.1% to 3%, based on the weight of all starting materials in the release coating composition.

Other optional starting materials which may also be added to curable polyorganosiloxane release coating composition described herein include, for example, reactive diluents, fragrances, preservatives and fillers, for example, silica, quartz or chalk.

Alternatively, the curable polyorganosiloxane release coating composition may be free of filler or contains only a limited amount of filler, such as 0 to 30% by weight of the release coating composition. Fillers can agglomerate or otherwise stick to the coater equipment used to apply the release coating. They can hinder optical properties, for example transparency, of the release coating and of the release liner formed therewith. The fillers may be prejudicial to the adherence of the adherend.

The curable polyorganosiloxane release coating composition may be free of conventional release modifiers that have been used in the past to control (decrease) the level of release force (the adhesive force between the release coating and an adherend thereto, such as a label including a pressure sensitive adhesive). Examples of such release modifiers include trimethylsiloxy-terminated dimethyl, phenylmethylsiloxanes. Without wishing to be bound by theory, it is thought that including a trimethylsiloxy-terminated dimethyl, phenylmethylsiloxanes in a release coating composition may lower subsequent adhesion strength and/or increase migration of the release coatings prepared therefrom.

The curable polyorganosiloxane release coating composition may be free from fluoroorganosilicone compounds. It is believed that, during the cure, a fluorocompound, because of its low surface tension, will rapidly migrate to the interface of a coating composition and a substrate, for example a polyorganosiloxane release coating composition/PET film interface, and prevent adherence of the release coating (prepared by curing the release coating composition) to the substrate by making a fluorine containing barrier. By making a barrier, the fluorocompound prevents any component from reacting at the interface. Moreover, fluorosilicone compounds are usually expensive.

The release coating composition of the present invention may be prepared by mixing the starting materials together, for example, to prepare a one part composition. However, it may be desirable to prepare a release coating composition as a multiple part composition, in which the crosslinker and catalyst are stored in separate parts, until the parts are combined at the time of use (e.g., shortly before application to a substrate).

For example, a multiple part composition may comprise:
Part (A) a base part comprising A) the branched aliphatically unsaturated polyorganosiloxane blend, C) the hydrosilylation reaction catalyst, and E) the aryl-functional polydiorganosiloxane; and when present, H) the anti-mist additive, and
Part (B) a curing agent part comprising A) the branched aliphatically unsaturated polyorganosiloxane blend and B) the crosslinker. Starting material D), the hydrosilylation reaction inhibitor may be added to either Part (A), Part (B), or both. When present, F) the anchorage additive and G) the solvent may be added to Part (A), Part (B), or both. Part (A) and Part (B) may be combined in a weight ratio (A):(B) of 1:1 to 10:1, alternatively 1:1 to 5:1, and alternatively 1:1 to 2:1. Part (A) and Part (B) may be provided in a kit with instructions for how to combine the parts to prepare the release coating composition and/or how to apply the release coating composition to a substrate.

Alternatively, when the anchorage additive is present, it can be incorporated in either of Part (A) or Part (B), or it can be added in a separate (third) part.

Alternatively, the release coating composition may be prepared by a method comprising:
1) mixing starting materials comprising A) the branched aliphatically unsaturated polyorganosiloxane, B) the crosslinker, C) the hydrosilylation reaction catalyst, D) the hydrosilylation reaction inhibitor, E) the aryl-functional polydiorganosiloxane, and optionally one or more of F) the anchorage additive, G) the solvent, and H) the anti-mist additive, thereby forming a mixture; and
2) applying the mixture on a substrate.

The release coating composition can for example be applied to the substrate by any convenient means such as spraying, doctor blade, dipping, screen printing or by a roll coater, e.g. an offset web coater, kiss coater or etched cylinder coater.

The release coating composition of the invention can be applied to any substrate, such as polymer film substrates, for example polyester, particularly polyethylene terephthalate (PET), polyethylene, polypropylene, or polystyrene films. The release coating composition can alternatively be applied to a paper substrate, including plastic coated paper, for example paper coated with polyethylene, glassine, super calender paper, or clay coated kraft. The release coating composition can alternatively be applied to a metal foil substrate, for example aluminum foil.

The method may further comprise: 3) treating the substrate before coating the mixture on the substrate. Treating the substrate may be performed by any convenient means such as a plasma treatment or a corona discharge treatment. Alternatively, the substrate may be treated by applying a primer. In certain instances anchorage of the release coating may be improved if the substrate treated before coating.

The method may further comprise: 4) removing solvent, which may be performed by any conventional means, such as heating at 50°C to 100°C for a time sufficient to remove all or a portion of the solvent. The method may further comprise: 5) curing the release coating composition to form a release coating on a surface of the substrate. Curing may be performed by any conventional means such as heating at 100°C to 200°C.

Under production coater conditions cure can be affected in a residence time of 1 second to 30 seconds, alternatively 1 second to 6 seconds, alternatively 1.5 seconds to 3 seconds, at an air temperature of 120-150°C. Heating for steps 4) and/or 5) can be performed in an oven, e.g., an air circulation oven or tunnel furnace or by passing the coated film around heated cylinders.

The coat weight of the release coating may be 0.97 g/m² to 1.3 g/m². Without wishing to be bound by theory, one benefit of the curable polyorganosiloxane release coating described herein is the ability to provide low release force (< 3.0 g/inch as tested by the method in Reference Example 2 (2) and high Subsequent Adhesive Strength (> 80% as tested by the method in Reference Example 2(4)) at low coat weights (e.g., 1.3 g/m² or less).

### Method of Use

The release liners prepared as described above can be used to protect pressure sensitive adhesives. Customers may coat a liquid pressure sensitive adhesive composition directly on the release liner and remove the solvent or water by heat, alternatively by UV cure, then laminate with substrates and rewind to rolls. Alternatively, customers may laminate the release liner with dry pressure sensitive adhesive or sticky film for tapes, labels or die-cutting applications.

### EXAMPLES

These examples are intended to illustrate some embodiments of the invention to one skilled in the art and are not to be interpreted as limiting the scope of the invention set forth in the claims. The following abbreviations were used: RF: Release Force (Release Tester), CW: Coat Weight (Oxford XRF), RO: Rub Off (Anchorage performance), and SAS: Subsequent Adhesion Strength (Migration performance). RT: Room temperature of 25°C. Table 1, below, shows the starting materials used in these examples. Unless otherwise indicated, viscosity is measured at 25°C.

**Table 1 - Starting Materials for Examples**

| Abbrev. | Chemical description | Function | Commercial Source |
|---|---|---|---|
| Mixture 1 | 97.4% of a polyorganosiloxane including SiO_{4/2}, Me₂SiO_{2/2}, Me₃SiO_{1/2}, and ViMe₂SiO_{1/2} units, with viscosity of 450 mPa·s at 25°C, with a vinyl content of 0.47%, where Me represents methyl and Vi represents vinyl | A-1) First (Q-branched) polyorganos iloxane | Dow Silicones Corporation of Midland, Michigan, USA |
| | 2% of a polyorganosiloxane including SiO_{4/2}, Me₂SiO_{2/2}, Me₃SiO_{1/2}, and ViMe₂SiO_{1/2} units, with viscosity of 40,000 mPa·s at 25°C, and with a vinyl content of 0.20% where Me represents methyl and Vi represents vinyl | A-1) First (Q-branched) polyorganos iloxane | |
| | 0.6% of 1-ETHYNYL-1-CYCLOHEXANOL | D) Inhibitor | |
| A-2-1 | A polyorganosiloxane of unit formula (Me₃SiO_{1/2})_{0.97}(ViMe₂SiO_{1/2})_{1.73}(Me₂SiO _{2/2})_{95.09}(MeSiO_{3/2})_{2.21} having a viscosity of 650 mPa·s at 25°C and a vinyl content of 0.59% | A-2) Vinyl T branch polymer | Dow Silicones Corporation of Midland, Michigan, USA |
| B-1-1 | Trimethylsiloxy-endblocked methylhydrogenpolysiloxane having 20 mPa s | B) Crosslinker | Dow Silicones Corporation of Midland, Michigan, USA |
| C-1-1 | 1.5 % by weight of Pt-1,3-divinyl-1,1,3,3-tetramethyldisiloxane complex in dimethylvinylsiloxy-terminated dimethylpolysiloxane having a viscosity of 450 mPa·s | C) Catalyst | Dow Silicones Corporation of Midland, Michigan, USA |
| D-1-1 | ETCH: 1-ETHYNYL-1-CYCLOHEXANOL | D) Inhibitor | BASF Corporation of Ludwigshafe, DE |
| E-1-1 (Comparati ve) | A trimethyl-siloxy terminated, poly(dimethyl/methylphenyl)siloxane copolymer with 10 mol% D^{Ph} units, viscosity of 500 mPa·s and vinyl content of 0. | comparative release force modifier | Dow Silicones Corporation of Midland, Michigan, USA |
| E-1-2 | A trimethyl-siloxy terminated, poly(dimethyl/methylphenyl/methylvinyl)siloxa ne copolymer of unit formula MD₁₄₄DPh₁₆DVi_{0.6}M with viscosity 590 mPa-s and vinyl content = 0.12% | E) release force modifier | The copolymer was synthesized by equilibrium polymerizatio n reaction in siloxane system. |
| E-1-3 | A trimethyl-siloxy terminated, poly(dimethyl/diphenyl/methylvinyl)siloxane copolymer of unit formula MD₄₉₄D^{Ph₂}₂₆D^{Vi}_{1.9}M with viscosity of 7,680 mPa-s and vinyl content = 0.12% | E) release force modifier | The copolymer was synthesized by equilibrium polymerizatio n reaction in siloxane system. |
| E-1-4 | A trimethyl-siloxy terminated, poly(dimethyl/methylphenyl/methylvinyl)siloxa ne copolymer of unit formula MD₄₆₈D^{Ph}₅₂D^{Vi}_{1.9}M having a viscosity of 7,000 mPa·s and a vinyl content = 0.12%. | E) release force modifier | The copolymer was synthesized by equilibrium polymerizatio n reaction in siloxane system. |
| E-1-5 | A trimethyl-siloxy terminated, poly(dimethyl/methylphenyl/methylvinyl)siloxa ne copolymer of unit formula MD₉₉₉DPh₁₁₁D^{Vi}_{4.0} having a viscosity of 60,000 mPa.s and a vinyl content = 0.12% | E) release force modifier | The copolymer was synthesized by equilibrium polymerizatio n reaction in siloxane system. |
| E-1-6 | A trimethyl-siloxy terminated, poly(dimethyl/methylphenyl/methylvinyl)siloxa ne copolymer of unit formula MD₄₆₈DPh₅₂DVi_{0.9}M having a viscosity of 10,000 mPa·s and a vinyl content = 0.06%. | comparative release force modifier | The copolymer was synthesized by equilibrium polymerizatio n reaction in siloxane system. |
| E-1-7 | A trimethyl-siloxy terminated, poly(dimethyl/methylphenyl/methylvinyl)siloxa ne copolymer of unit formula MD₄₅₈D^{Ph}₅₂D^{Vi}_{3.8}M having a viscosity of 10,000 mPa-s and a vinyl content = 0.24% | comparative release force modifier | The copolymer was synthesized by equilibrium polymerizatio n reaction in siloxane system. |
| F-1-1 | SYL-OFF^{™} SL 9176 ANCHORAGE ADDITIVE commercially available from Dow Silicones Corporation of Midland, Michigan, USA | F) Anchorage additive | Dow Silicones Corporation of Midland, Michigan, USA |

In the table above, M represents a unit of formula (Me₃SiO_{1/2}), D^{Ph} represents a unit of formula (MePhSiO_{2/2}), D^{Vi} represents a unit of formula (MeViSiO_{2/2}), D^{Ph₂} represents a unit of formula (Ph₂SiO_{2/2}), Me represents methyl, Ph represents phenyl, and Vi represents vinyl.

### Reference Example 1 - Release Coating Preparation

Release coating composition samples were prepared by the following steps I. and II., using the starting materials and amounts shown in the tables.
I. The following starting materials were combined in a vessel:
   i) Either Mixture 1 or a mixture of A-2-1 and D-1-1,
   ii) one of the release force modifiers E) in Table 1,
   iii) anchorage additive F-1-1, and
   iv) crosslinker B-1-1 and mixed until homogeneous. A suitable amount of toluene solvent was added, if needed to homogenize the starting materials.
II. The catalyst C-1-1 was added, and the resulting mixture was mixed for 10 minutes, thereby forming a release coating composition.

The release coating composition was then coated on a PET substrate using a coater. The release coating composition was cured via thermal addition cure in an oven. (generally 140°C for 30 seconds). Three samples of each release coating composition (formulation, F) were prepared and evaluated according to Reference Example 2, and the results were averaged. The formulations are shown in Table 2, with amounts of each starting material in weight parts, unless otherwise indicated. Reference Example 2 - Release Coating Evaluation
(1) Coat weight (CW) in g/m² was evaluated using X-Ray to detect the coat weight of the cured release coating on the substrate with an Oxford lab-x 3500 instrument manufactured by Oxford Instruments PLC, Oxon, United Kingdom. Uncoated PET was used as a control sample (blank). The test method was FINAT Test Method No.7 (FINAT Technical Handbook 7th edition, 2005).
(2) Release force (RF-RT) in g/in was evaluated using the 180 degree peeling test to measure release force from the release liner. A Tesa 7475 standard tape was laminated on a cured release coating, a loaded weight of 20g/cm² was placed on the laminated sample and left under RT (room temperature of 25°C) for 20 hours. After 20 hours, the loaded weight was removed, and the sample was allowed to rest for 30 minutes. The release force was then tested by a Chemlnstruments AR-1500 using FINAT Test Method No.10 (FINAT Technical Handbook 7th edition, 2005).
(3) Release force (RF-70 ºC aging) in g/in was evaluated using the 180 degree peeling test to measure release force from the release liner. A Tesa 7475 standard tape was laminated on a cured release coating, a loaded weight of 20g/cm² was placed on the laminated sample and left under 70 ºC for 20 hours. After 20 hours, the loaded weight was removed and the sample allowed to rest for 30 minutes. Release force was then tested by Chemlnstruments AR-1500 using FINAT Test Method No.10 (FINAT Technical Handbook 7th edition, 2005).
(4) SAS (Subsequent Adhesive Strength, indicator of migration) in % was evaluated as follows. A test tape was laminated by Nitto Denko 31B tape on a cured release coating under a loaded weight of 20g/cm² and left under 70 ºC for 20 hours. After 20 hours, the loaded weight was removed and the sample was allowed to rest 30 minutes at room temperature. Then transfer the 31B tape on PET substrate and wait for another 1 hour. The release force was tested by Chemlnstruments AR-1500 using FINAT Test Method No.11 (FINAT Technical Handbook 7th edition, 2005). In this SAS test, a laminate 31B tape on a PTFE substrate was tested, and the PTFE sample was treated the same way as a cured release coating sample. The SAS value was recorded as RFᵣₑₗₑₐₛₑ/RF_{PTFE}×100%.
(5) Transparency was evaluated by visual inspection.

The starting materials and test results used to prepare different samples are shown in the tables.

**Table 2 - Release Coating Samples, Starting Materials and Evaluation Results**

| Sample | F1 (Comp) | F2 (Working) | F3 (Comp ) | F4 (Comp) | F5 (Working) | F6 (Comp) | F18 (Comp) | F19 (Comp) | F20 (Working) | F21 (Working ) |
|---|---|---|---|---|---|---|---|---|---|---|
| Mixture 1 | 100 | 99.2 | 99.2 | 100 | 99.6 | 99.6 | 99.2 | 99.2 | 99.2 | 99.2 |
| B-1-1 | 1.84 | 1.84 | 1.84 | 1.84 | 1.84 | 1.84 | 1.56 | 2.16 | 1.84 | 1.84 |
| F-1-1 | 0.6 | 0.6 | 0.6 | 0.6 | 0.6 | 0.6 | 0.6 | 0.6 | 0.6 | 0.6 |
| C-1-1 (expressed as ppm of Pt) | 130 | 130 | 130 | 130 | 130 | 130 | 130 | 130 | 130 | 130 |
| E-1-1 | 0 | 0 | 0.8 | 0 | 0 | 0.4 | 0 | 0 | 0 | 0 |
| E-1-2 | 0 | 0.8 | 0 | 0 | 0.4 | 0 | 0.8 | 0.8 | 0.4 | 0.4 |
| SiH/Vi Ratio | 1.6 | 1.6 | 1.6 | 1.6 | 1.6 | 1.6 | 1.35 | 1.9 | 1.6 | 1.6 |
| CW | 1.182 | 1.081 | 1.139 | 1.096 | 0.972 | 1.118 | 1.171 | 1.221 | 1.451 | 1.213 |
| RF-RT | 3.4 | 2.4 | 2.4 | 3.9 | 2.8 | 3.1 | 2.5 | 3.9 | 2.2 | 2.9 |
| RF-70°C | 5.8 | 5.1 | 5.3 | 7.1 | 5.6 | 5.5 | 4.6 | 8.5 | 4.8 | 5.2 |
| SAS | 91.8 | 84.7 | 79.7 | 89.8 | 85.7 | 80.8 | 76.9 | 86.0 | 84.7 | 87.1 |
| Transparency | clear | clear | clear | clear | clear | clear | clear | clear | clear | clear |

Samples F1, F2, and F3; and Samples F4, F5, and F6 show that a release coating prepared from a composition containing a poly(dimethyl/methylphenyl/methylvinyl)siloxane copolymer as release force modifier had higher subsequent adhesion strength (SAS) than a comparable release coating composition containing a trimethyl-siloxy terminated poly(dimethyl/methylphenyl)siloxane copolymer while keeping comparable release force tested under the same conditions. These examples further showed that comparable compositions without a release force modifier produced release coatings with release force (RF-RT) > 3.0, which is undesirably high for some applications.

Samples F2, F18, and F19 showed that when SiH/Vi ratio of the release coating composition was ≤ 1.35:1, then subsequent adhesion strength was undesirably low for some applications, and when SiH/Vi ratio was ≥ 1.9:1, then release force (RF-RT) was too high (> 3.0) for some applications.

The RF-RT, RF-70°C, and SAS evaluations described in Reference Example 2 were repeated except the samples were aged for 1 month instead of 20 hours. Table 3 shows these evaluation results.

**Table 3 - Aged Evaluations**

| Sample | F20 (Working) | F21 (Working) |
|---|---|---|
| RF-RT, 1 month | 2.3 | 2.8 |
| RF-70C, 1 month | 4.6 | 5.1 |
| SAS, 1 month | 86.2 | 86.8 |

These results showed that the samples had stable release force and sustained adhesion strength over time.

**Table 4 - Release Coating Samples, Starting Materials and Evaluation Results**

| Sample | F7 Comparative) | F8 (Working) | F9 (Working) | F10 (Comparative) |
|---|---|---|---|---|
| A-2-1 | 100 | 99.6 | 99.6 | 99.6 |
| D-1-1 | 0.6 | 0.6 | 0.6 | 0.6 |
| B-1-1 | 2.32 | 2.32 | 2.32 | 2.32 |
| F-1-1 | 0.6 | 0.6 | 0.6 | 0.6 |
| C-1-1 (expressed as ppm of Pt) | 130 | 130 | 130 | 130 |
| E-1-1 | 0 | 0 | 0 | 0.4 |
| E-1-2 | 0 | 0.4 | 0 | 0 |
| E-1-3 | 0 | 0 | 0.4 | 0 |
| CW | 1.092 | 0.980 | 1.026 | 1.031 |
| RF-RT | 3.3 | 2.6 | 2.5 | 2.4 |
| RF-70°C | 5.1 | 4.7 | 4.7 | 4.5 |
| SAS | 88.8 | 82.4 | 83.2 | 77.9 |
| Transparency | clear | clear | clear | clear |

These examples showed that a release coating prepared from a composition containing a poly(dimethyl/methylphenyl/methylvinyl)siloxane copolymer had higher subsequent adhesion strength than a comparable release coating composition containing a trimethyl-siloxy terminated poly(dimethyl/methylphenyl)siloxane copolymer while keeping comparable release force tested under the same conditions. These examples further showed that a comparable composition without a release force modifier produced a release coating with release force (RF-RT) > 3.0, which is undesirably high for some applications.

**Table 5 - Comparative Release Coating Compositions**

| Sample | F11 | F12 | F13 | F14 | F15 | F16 |
|---|---|---|---|---|---|---|
| Mixture 1 | 80 | 80 | 80 | 80 | 80 | 80 |
| B-1-1 | 1.52 | 1.57 | 1.57 | 1.57 | 1.66 | 1.57 |
| F-1-1 | 0.6 | 0.6 | 0.6 | 0.6 | 0.6 | 0.6 |
| C-1-1 (expressed as ppm of Pt) | 130 | 130 | 130 | 130 | 130 | 130 |
| E-1-2 | 0 | 20 | 0 | 0 | 0 | |
| E-1-3 | 0 | 0 | 0 | 0 | 0 | 20 |
| E-1-4 | 0 | 0 | 20 | 0 | 0 | 0 |
| E-1-5 | 0 | 0 | 0 | 20 | 0 | 0 |
| E-1-6 | 20 | 0 | 0 | 0 | 0 | 0 |
| E-1-7 | 0 | 0 | 0 | 0 | 20 | 0 |
| CW | 1.217 | 1.095 | 1.207 | 1.309 | 1.319 | 1.234 |
| RF-RT | 2.2 | 1.9 | 2.5 | 2.0 | 3.7 | 2.1 |
| RF-70°C | 2.6 | 2.1 | 3.4 | 2.3 | 4.8 | 2.9 |
| SAS | 65.7 | 70.6 | 70.1 | 68.7 | 71.9 | 69.6 |

These comparative examples showed that when the amount of release force modifier was too high, subsequent adhesion strength was < 80%, which is undesirably low for some applications. Furthermore, sample F15 showed that when a trimethyl-siloxy terminated, poly(dimethyl/methylphenyl/methylvinyl)siloxane copolymer with vinyl content of 0.24% was used, release force was > 3.0 which is undesirably high for some applications.

### Industrial Applicability

A release coating composition containing an aryl-functional polydiorganosiloxane having aliphatically unsaturated groups, is suitable for use in forming a cured release coating on substrates, and the cured release coatings desirable (high) sustained adhesion strength and (low) release force, making them suitable for use in electronics applications, such as release liners for silicone pressure sensitive adhesives used in electronic device applications, such as touch panels. Without wishing to be bound by theory, it is thought that the aliphatically unsaturated groups react to form a part cured network on a substrate that can provide a lower release force to sticky adhesives and while keeping high subsequent adhesion strength.

## Claims

1. A curable polyorganosiloxane release coating composition comprising:
A) a branched aliphatically unsaturated polyorganosiloxane,
B) a crosslinker having at least 3 silicon bonded hydrogen atoms per molecule,
C) a hydrosilylation reaction catalyst in an amount sufficient to provide 1 ppm to 500 ppm by weight of a platinum group metal based on combined weights of starting materials A), B), C), D) and E),
D) a hydrosilylation reaction inhibitor in an amount of 0.001% to 5% based on combined weights of starting materials A), B), C), D) and E), and
E) an aryl-functional polydiorganosiloxane having a content of aliphatically unsaturated groups > 0.06% and < 0.24%, where starting material E) is present in an amount > 0 to 1% based on combined weights of starting materials A), B), C), D), and E); and
where all starting materials are present in amounts sufficient to provide a molar ratio of silicon bonded hydrogen atoms to aliphatically unsaturated groups (overall SiH:Vi ratio) in the release coating composition of > 1.35:1 to < 1.9: 1.

2. The composition of claim 1, further comprising one or more additional starting materials selected from the group consisting of F) an anchorage additive, G) a solvent, and H) an anti-mist additive.

3. The composition of claim 1, where the branched aliphatically unsaturated polyorganosiloxane is selected from the group consisting of:
unit formula (A-1) (R¹₃SiO_{1/2})ₐ(R²R¹₂SiO_{1/2})_{b}(R¹₂SiO_{2/2})_{c}(SiO_{4/2})_{d}, where each R¹ is independently a monovalent hydrocarbon group free of aliphatic unsaturation and each R² is an aliphatically unsaturated hydrocarbon group, where subscript a ≥ 0, subscript b > 0, subscript c is 15 to 995, and subscript d is > 0;
unit formula (A-2) (R¹₃SiO_{1/2})ₑ(R²R¹₂SiO_{1/2})_{f}(R¹₂SiO_{2/2})_{g}(R¹SiO_{3/2})ₕ, where subscript e ≥ 0, subscript f > 0, subscript g is 15 to 995, and subscript h > 0; and
a combination of both (A-1) and (A-2).

4. The composition of claim 3, where 22 ≥ a ≥ 0, 22 ≥ b > 0, 995 ≥ c ≥ 15, 10 ≥ d > 0, 12 ≥ e ≥ 0, 12 ≥ f > 0, 995 ≥ g ≥ 15, and 10 ≥ h > 0.

5. The composition claim 3, where each R¹ is an alkyl group of 1 to 6 carbon atoms (alternatively methyl) and each R² is an alkenyl group of 2 to 6 carbon atoms (alternatively vinyl, allyl or hexenyl).

6. The composition of claim 1, where the crosslinker has unit formula (B-1): (R¹₃SiO_{1/2})₂(R¹₂SiO_{2/2})ₖ(R¹HSiO_{2/2})ₘ, where each R¹ is independently selected from the group consisting of a monovalent hydrocarbon group free of aliphatic unsaturation and a monovalent halogenated hydrocarbon group free of aliphatic unsaturation, subscript k ≥ 0, subscript m > 0, and a quantity (m+ k) is 8 to 400.

7. The composition of claim 6, where each R¹ is an alkyl group of 1 to 6 carbon atoms (alternatively methyl).

8. The composition of claim 1, where the platinum group metal catalyst is selected from the group consisting of: (C-1) a metal selected from platinum, rhodium, ruthenium, palladium, osmium, and iridium; (C-2) a compound of the metal (C-1), (C-3). a complex of the compound (C-2) with an organopolysiloxane, and (C-4) the compound (C-2) microencapsulated in a matrix or core/shell type structure.

9. The composition of claim 1, where the hydrosilylation reaction inhibitor is selected from the group consisting of (D-1) acetylenic alcohols, (D-2) silylated acetylenic compounds, (D-3) cycloalkenylsiloxanes, (D-4) ene-yne compounds, (D-5) triazoles, (D-6) phosphines, (D-7) mercaptans, (D-8) hydrazines, (D-9) amines, (D-10) fumarates, (D-11) maleates, (D-12) nitriles, (D-13) ethers, and (D-14) combinations of two or more of (D-1) to (D-13).

10. The composition of claim 1, where the aryl functional polydiorganosiloxane has unit formula: (R³₃SiO_{1/2})ᵣ(R³₂R⁴SiO_{1/2})ₛ(R³₂R⁵SiO_{1/2})ₜ(R³₂SiO_{2/2})ᵤ(R³R⁴SiO_{2/2})ᵥ(R³R⁵Si O_{2/2})_{w}(R⁴₂SiO_{2/2})ₓ, where each R³ is an independently selected alkyl group, each R⁴ is an independently selected aryl group, each R⁵ is independently selected from the group consisting of alkenyl and alkynyl, subscript r ≥ 0, subscript s ≥ 0, subscript t ≥ 0, subscript u ≥ 0, subscript w ≥ 0, subscript x ≥ 0, a quantity (r+s+t) = 2, a quantity (t+w) has a value sufficient to provide the aryl-functional polydiorganosiloxane with the content of aliphatically unsaturated groups of > 0.06% to < 0.24%, a quantity (s+v+x) > 0, and a quantity (r+s+t+u+v+w+x) ≥ 3.

11. The composition of claim 10, where the aryl functional polydiorganosiloxane has unit formula: (R³₃SiO-_{1/2})₂(R³₂SiO_{2/2})ᵤ(R³R⁴siO_{2/2})ᵥ(R³R⁵SiO_{2/2})_{w}(R⁴₂SiO_{2/2})ₓ, where 0 ≤ u ≤ 1,000, 0 ≤ v ≤ 120, 0 <w ≤ 4, 0 ≤ x ≤ 26, and a quantity (v + x) has a value sufficient to provide the aryl-functional polydiorganosiloxane with the content of aliphatically unsaturated groups of 0.07% to 0.21%, alternatively 0.08% to 0.19%, alternatively 0.09% to 0.16%, alternatively 0.10% to 0.14%, alternatively 0.11 % to 0.13%, and alternatively 0.12%.

12. The composition of claim 2, where F) the anchorage additive is present, and the anchorage additive is selected from the group consisting of F-1) a polyorganosiloxane having at least one aliphatically unsaturated hydrocarbon group, at least one hydrolyzable group, and at least one epoxy-functional group per molecule and an epoxy-functional alkoxysilane; F-2) a combination of a polyorganosiloxane having at least one aliphatically unsaturated hydrocarbon group and at least one hydrolyzable group per molecule and an epoxy-functional alkoxysilane; and F-3) a combination of F-1) and F-2).

13. The composition of claim 2, where the solvent is present, and the solvent is selected from: polyalkylsiloxanes, alcohols, ketones, aromatic hydrocarbons, aliphatic hydrocarbons, glycol ethers, tetrahydrofuran, mineral spirits, naphtha, or a combination thereof.

14. A method for preparing a release liner comprising a release coating on a surface of a substrate, the method comprising:
optionally treating a surface of a substrate,
1) applying a composition of any one of the preceding claims to the surface of the substrate,
optionally 2) removing solvent, if present;
3) curing the composition to form the release coating on the surface of the substrate.

15. The method of claim 14, where the composition is applied in amount sufficient to provide a coat weight of the release coating of 0.97 g/m² to 1.3 g/m².

16. A release liner prepared by the method of claim 14.

17. The release liner of claim 16, where the release liner has a sustained adhesion strength > 80% as measured by the test method in Reference Example 2 (4) and a release force < 3.0 g/inch as measured by the test method in Reference Example 2 (2).

18. Use of the release liner of claim 17 for a silicone pressure sensitive adhesive article in an electronic device application.

19. The use of claim 18, where the electronic device comprises a touch panel to which the pressure sensitive adhesive article is applied.

## Patentansprüche

1. Härtbare Polyorganosiloxanabziehbeschichtungszusammensetzung, umfassend:
A) ein verzweigtes aliphatisch ungesättigtes Polyorganosiloxan,
B) ein Vernetzer, der mindestens 3 Silicium-gebundene Wasserstoffatome pro Molekül aufweist,
C) einen Hydrosilylierungsreaktionskatalysator in einer Menge, die ausreicht, um 1 ppm bis 500 Gew.-ppm eines Platingruppenmetalls basierend auf kombinierten Gewichten der Ausgangsmaterialien A), B), C), D) und E) bereitzustellen,
D) einen Hydrosilylierungsreaktionshemmer in einer Menge von 0,001 % bis 5 % basierend auf kombinierten Gewichten der Ausgangsmaterialien A), B), C), D) und E), und
E) ein Aryl-funktionelles Polydiorganosiloxan, das einen Gehalt von aliphatisch ungesättigten Gruppen > 0,06 % und < 0,24 % aufweist, wobei das Ausgangsmaterial E) in einer Menge von > 0 bis 1 % basierend auf kombinierten Gewichten der Ausgangsmaterialien A), B), C), D), und E) vorhanden ist; und
wobei alle Ausgangsmaterialien in Mengen vorhanden sind, die ausreichen, um ein Molverhältnis von Silicium-gebundenen Wasserstoffatomen zu aliphatisch ungesättigten Gruppen (gesamtes SiH : Vi-Verhältnis) in der Abziehbeschichtungszusammensetzung von > 1,35 : 1 bis < 1,9 : 1 bereitzustellen.

2. Zusammensetzung nach Anspruch 1, ferner umfassend ein oder mehrere zusätzliche Ausgangsmaterialien, die aus der Gruppe ausgewählt sind, bestehend aus F) einem Verankerungszusatz, G) einem Lösungsmittel und H) einem Antinebelzusatz.

3. Zusammensetzung nach Anspruch 1, wobei das verzweigte aliphatisch ungesättigte Polyorganosiloxan aus der Gruppe ausgewählt ist, bestehend aus:
Einheitsformel (A-1) (R¹₃SiO_{1/2})ₐ(R²R¹₂SiO_{1/2})_{b}(R¹₂SiO_{2/2})_{c}(SiO_{4/2})_{d}, wobei jedes R¹ unabhängig eine einwertige Kohlenwasserstoffgruppe frei von aliphatischer Ungesättigtheit ist und jedes R² eine aliphatisch ungesättigte Kohlenwasserstoffgruppe ist, wobei Index a ≥ 0, Index b > 0, Index c 15 bis 995 ist, und Index d >0 ist;
Einheitsformel (A-2) (R¹₃SiO_{1/2})ₑ(R²R¹₂SiO_{1/2})_{f}(R¹₂SiO_{2/2})_{g}(R¹SiO_{3/2})ₕ, wobei Index e ≥ 0, Index f > 0, Index g 15 bis 995 ist und Index h > 0; und
eine Kombination von sowohl (A-1) als auch (A-2).

4. Zusammensetzung nach Anspruch 3, wobei 22 ≥ a ≥ 0, 22 ≥ b > 0, 995 ≥ c ≥ 15, 10 ≥ d > 0, 12 ≥ e ≥ 0, 12 ≥ f > 0, 995 ≥ g ≥ 15 und 10 ≥ h > 0.

5. Zusammensetzung nach Anspruch 3, wobei jedes R¹ eine Alkylgruppe von 1 bis 6 Kohlenstoffatomen (alternativ Methyl) ist und jedes R² eine Alkenylgruppe von 2 bis 6 Kohlenstoffatomen (alternativ Vinyl, Allyl oder Hexenyl) ist.

6. Verfahren nach Anspruch 1, wobei der Vernetzer Einheitsformel (B-1) aufweist:
(R¹₃SiO_{1/2})₂(R¹₂SiO_{2/2})ₖ(R¹HSiO_{2/2})ₘ, wobei jedes R¹ unabhängig aus der Gruppe ausgewählt ist, bestehend aus einer einwertigen Kohlenwasserstoffgruppe frei von aliphatischer Ungesättigtheit und einer einwertigen halogenierten Kohlenwasserstoffgruppe frei von aliphatischer Ungesättigtheit, Index k ≥ 0, Index m > 0, und eine Menge (m + k) 8 bis 400 ist.

7. Zusammensetzung nach Anspruch 6, wobei jedes R¹ eine Alkylgruppe von 1 bis 6 Kohlenstoffatomen (alternativ Methyl) ist.

8. Zusammensetzung nach Anspruch 1, wobei der Platingruppenmeltallkatalyst aus der Gruppe ausgewählt ist, bestehend aus: (C-1) einem Metall, das aus Platin, Rhodium, Ruthenium, Palladium, Osmium und Iridium ausgewählt ist; (C-2) einer Verbindung des Metalls (C-1), (C-3), einem Komplex der Verbindung (C-2) mit einem Organopolysiloxan und (C-4) der Verbindung (C-2), die in einer Matrix oder Kern/Hülle-artigen Struktur mikroverkapselt ist.

9. Zusammensetzung nach Anspruch 1, wobei der Hydrosilylierungsreaktionshemmer aus der Gruppe ausgewählt ist, bestehend aus (D-1) acetylischen Alkoholen, (D-2) silylierten acetylischen Verbindungen, (D-3) Cycloalkenylsiloxanen, (D-4) en-yn-Verbindungen, (D-5) Triazolen, (D-6) Phosphinen, (D-7) Mercaptanen, (D-8) Hydrazinen (D-9) Aminen, (D-10) Fumaraten, (0-11) Maleaten, (D-12) Nitrilen, (D-13) Ethern und (D-14) Kombinationen von zwei oder mehr von (D-1) bis (D-13).

10. Zusammensetzung nach Anspruch 1, wobei das Aryl-funktionelle Polydiorganosiloxan eine Einheitsformel aufweist:
(R³₃SiO_{1/2})ᵣ(R³₂R⁴SiO_{1/2})ₛ(R³₂R⁵SiO_{1/2})ₜ(R³₂SiO_{2/2})ᵤ(R³R⁴SiO_{2/2})ᵥ(R³R⁵SiO_{2/ 2})_{w}(R⁴₂SiO_{2/2})x, wobei jedes R³ eine unabhängig ausgewählte Alkylgruppe ist, jedes R⁴ eine unabhängig ausgewählte Arylgruppe ist, jedes R⁵ aus der Gruppe unabhängig ausgewählt ist, bestehend aus Alkenyl und Alkynyl, Index r ≥ 0, Index s ≥ 0, Index t ≥ 0, Index u ≥ 0, Index w ≥ 0, Index x ≥ 0, eine Menge (r+s+t) = 2, eine Menge (t+w) einen Wert aufweist, der ausreicht, um das Aryl-funktionelle Polydiorganosiloxan mit dem Gehalt von aliphatischen ungesättigten Gruppen von > 0,06 % bis < 0,24 %, einer Menge (s+v+x) > 0, und einer Menge (r+s+t+u+v+w+x) ≥ 3 bereitzustellen.

11. Zusammensetzung nach Anspruch 10, wobei das Aryl-funktionelle Polydiorganosiloxan eine Einheitsformel aufweist:
(R³₃SiO_{1/2})₂(R³₂SiO_{2/2})ᵤ(R³R⁴SiO_{2/2})ᵥ(R³R⁵SiO_{2/2})_{w}(R⁴₂SiO_{2/2})ₓ, wobei 0 ≤ u ≤ 1.000, 0 < v ≤ 120, 0 < w ≤ 4, 0 < x ≤ 26, und eine Menge (v + x) einen Wert aufweist, der ausreicht, um das Aryl-funktionelle Polydiorganosiloxan mit dem Gehalt an aliphatisch ungesättigten Gruppen von 0,07 % bis 0,21 %, alternativ 0,08 % bis 0,19 %, alternativ 0,09 % bis 0,16 %, alternativ 0,10 % bis 0,14 %, alternativ 0,11 % bis 0,13 % und alternativ 0,12 % bereitzustellen.

12. Zusammensetzung nach Anspruch 2, wobei F) der Verankerungszusatz vorhanden ist und der Verankerungszusatz aus der Gruppe ausgewählt ist, bestehend aus F-1) einem Polyorganosiloxan, das mindestens eine aliphatisch ungesättigte Kohlenwasserstoffgruppe, mindestens eine hydrolysierbare Gruppe und mindestens eine Epoxid-funktionelle Gruppe pro Molekül und ein Epoxy-funktionelles Alkoxysilan aufweist; F-2) eine Kombination eines Polyorganosiloxans, das mindestens eine aliphatisch ungesättigte Kohlenwasserstoffgruppe und mindestens eine hydrolysierbare Gruppe pro Molekül und ein Epoxy-funktionelles Alkoxysilan aufweist; und F-3) eine Kombination von F-1) und F-2).

13. Zusammensetzung nach Anspruch 2, wobei das Lösungsmittel vorhanden ist und das Lösungsmittel ausgewählt ist aus: Polyalkylsiloxanen, Alkoholen, Ketonen, aromatischen Kohlenwasserstoffen, aliphatischen Kohlenwasserstoffen, Glycolethern, Tetrahydrofuran, Lackbenzinen, Naphtha oder einer Kombination davon.

14. Verfahren zum Herstellen einer Abziehfolie, umfassend eine Abziehbeschichtung auf einer Oberfläche eines Substrats, das Verfahren umfassend:
optional Behandeln einer Oberfläche eines Substrats,
1) Aufbringen einer Zusammensetzung nach einem der vorstehenden Ansprüche auf die Oberfläche des Substrats,
optional 2) Entfernen von Lösungsmittel, falls vorhanden;
3) Härten der Zusammensetzung, um die Abziehbeschichtung auf der Oberfläche des Substrats auszubilden.

15. Verfahren nach Anspruch 14, wobei die Zusammensetzung in einer Menge aufgebracht wird, die ausreicht, um ein Beschichtungsgewicht der Abziehbeschichtung von 0,97 g/m² bis 1,3 g/m² bereitzustellen.

16. Abziehfolie, die durch das Verfahren nach Anspruch 14 hergestellt wird.

17. Abziehfolie nach Anspruch 16, wobei die Abziehfolie eine anhaltende Haftfestigkeit von > 80 % aufweist, wie durch das Testverfahren in Referenzbeispiel 2 (4) gemessen, und eine Abziehkraft von < 0,3 g/Zoll wie durch das Testverfahren in Referenzbeispiel 2 (2) gemessen.

18. Verwendung der Abziehfolie nach Anspruch 17 für einen Silicondruckempfindlichen Klebstoffartikel in einer Aufbringung einer elektronischen Vorrichtung.

19. Verwendung nach Anspruch 18, wobei die elektronische Vorrichtung ein Berührungsfeld umfasst, an dem der druckempfindliche Klebstoffartikel aufgebracht ist.

## Revendications

1. Composition de revêtement antiadhésif de polyorganosiloxane durcissable comprenant :
A) un polyorganosiloxane à insaturation aliphatique ramifié,
B) un agent de réticulation comportant au moins 3 atomes d'hydrogène liés à du silicium par molécule,
C) un catalyseur de réaction d'hydrosilylation en une quantité suffisante pour obtenir 1 ppm à 500 ppm en poids d'un métal du groupe du platine sur la base des poids combinés des matières premières A), B), C), D) et E),
D) un inhibiteur de réaction d'hydrosilylation en une quantité de 0,001 % à 5 % sur la base des poids combinés des matières premières A), B), C), D) et E), et
E) un polydiorganosiloxane à fonctionnalité aryle ayant une teneur en groupes à insaturation aliphatique > 0,06 % et < 0,24 %, où la matière première E) est présente en une quantité > 0 à 1 % sur la base des poids combinés des matières premières A), B), C), D) et E) ; et
où toutes les matières de départ sont présentes en des quantités suffisantes pour obtenir un rapport molaire des atomes d'hydrogène liés à du silicium aux groupes à insaturation aliphatique (rapport global SiH:Vi) dans la composition de revêtement antiadhésif de > 1,35:1 à < 1,9:1.

2. Composition selon la revendication 1, comprenant en outre une ou plusieurs matières premières supplémentaires choisies dans le groupe constitué de F) un additif d'ancrage, G) un solvant, et H) un additif antibuée.

3. Composition selon la revendication 1, où le polyorganosiloxane à insaturation aliphatique ramifié est choisi dans le groupe constitué de :
la formule unitaire (A-1) (R¹₃SiO_{1/2})ₐ(R²R¹₂SiO_{1/2})_{b}(R¹₂SiO_{2/2})_{c}(SiO_{4/2})_{d}, où chaque R¹ est indépendamment un groupe hydrocarboné monovalent exempt d'insaturation aliphatique et chaque R² est un groupe hydrocarboné à insaturation aliphatique, où l'indice a ≥ 0, l'indice b > 0, l'indice c vaut de 15 à 995, et l'indice d est > 0 ;
la formule unitaire (A-2) (R¹₃SiO_{1/2})ₑ(R²R¹₂SiO_{1/2})f(R¹₂SiO_{2/2})_{g}(R¹SiO_{3/2})ₕ, où l'indice e ≥ 0, l'indice f > 0, l'indice g vaut de 15 à 995, et l'indice h > 0 ; et
une combinaison à la fois de (A-1) et de (A-2).

4. Composition selon la revendication 3, où 22 ≥ a ≥ 0, 22 ≥ b > 0, 995 ≥ c ≥ 15, 10 ≥ d > 0, 12 ≥ e ≥ 0, 12 ≥ f > 0, 995 ≥ g ≥ 15 et 10 ≥ h > 0.

5. Composition selon la revendication 3, où chaque R¹ est un groupe alkyle de 1 à 6 atomes de carbone (alternativement méthyle) et chaque R² est un groupe alcényle de 2 à 6 atomes de carbone (alternativement vinyle, allyle ou hexényle).

6. Composition selon la revendication 1, où l'agent de réticulation a la formule unitaire (B-1) : (R¹₃SiO_{1/2})₂(R¹₂SiO_{2/2})ₖ(R¹HSiO_{2/2})ₘ, où chaque R¹ est indépendamment choisi dans le groupe constitué d'un groupe hydrocarboné monovalent exempt d'insaturation aliphatique et d'un groupe hydrocarboné halogéné monovalent exempt d'insaturation aliphatique, l'indice k ≥ 0, l'indice m > 0, et une quantité (m + k) vaut de 8 à 400.

7. Composition selon la revendication 6, où chaque R¹ est un groupe alkyle de 1 à 6 atomes de carbone (alternativement méthyle).

8. Composition selon la revendication 1, où le catalyseur de métal du groupe du platine est choisi dans le groupe constitué de : (C-1) un métal choisi parmi le platine, le rhodium, le ruthénium, le palladium, l'osmium et l'iridium ; (C-2) un composé du métal (C-1), (C-3) un complexe du composé (C-2) avec un organopolysiloxane, et (C-4) le composé (C-2) microencapsulé dans une matrice ou une structure de type coeur/écorce.

9. Composition selon la revendication 1, où l'inhibiteur de réaction d'hydrosilylation est choisi dans le groupe constitué de (D-1) alcools acétyléniques, (D-2) composés acétyléniques silylés, (D-3) cycloalcénysiloxanes, (D-4) composés ène-yne, (D-5) triazoles, (D-6) phosphines, (D-7) mercaptans, (D-8) hydrazines, (D-9) amines, (D-10) fumarates, (D-11) maléates, (D-12) nitriles, (D-13) éthers et (D-14) combinaisons de deux de (D-1) à (D-13) ou plus.

10. Composition selon la revendication 1, où le polydiorganosiloxane à fonctionnalité aryle a la formule unitaire :
(R³₃SiO_{1/2})ᵣ(R³₂R⁴SiO_{1/2})ₛ(R³₂R⁵SiO_{1/2})ₜ(R³₂SiO_{2/2})ᵤ(R³R⁴SiO_{2/2})ᵥ(R³R⁵SiO_{2/2})_{w}( R⁴₂SiO_{2/2})ₓ, où chaque R³ est un groupe alkyle choisi indépendamment, chaque R⁴ est un groupe aryle choisi indépendamment, chaque R⁵ est choisi indépendamment dans le groupe constitué d'alcényle et d'alcynyle, l'indice r ≥ 0, l'indice s ≥ 0, l'indice t ≥ 0, l'indice u ≥ 0, l'indice w ≥ 0, l'indice x ≥ 0, une quantité (r + s + t) = 2, une quantité (t + w) a une valeur suffisante pour obtenir le polydiorganosiloxane à fonctionnalité aryle avec la teneur en groupes à insaturation aliphatique de > 0,06 % à < 0,24 %, une quantité (s + v + x) > 0, et une quantité (r + s + t + u + v + w + x) ≥ 3.

11. Composition selon la revendication 10, où le polydiorganosiloxane à fonctionnalité aryle a la formule unitaire :
(R³₃SiO_{1/2})₂(R³₂SiO_{2/2})ᵤ(R³R⁴SiO_{2/2})ᵥ(R³R⁵SiO_{2/2})_{w}(R⁴₂SiO_{2/2})ₓ, où 0 ≤ u ≤ 1000, 0 < v ≤ 120, 0 < w ≤ 4, 0 < x ≤ 26, et une quantité (v + x) a une valeur suffisante pour obtenir le polydiorganosiloxane à fonctionnalité aryle avec la teneur en groupes à insaturation aliphatique de 0,07 % à 0,21 %, en variante 0,08 % à 0,19 %, en variante 0,09 % à 0,16 %, en variante 0,10 % à 0,14 %, en variante 0,11 % à 0,13 %, et en variante 0,12 %.

12. Composition selon la revendication 2, où F) l'additif d'ancrage est présent, et l'additif d'ancrage est choisi dans le groupe constitué de F-1) un polyorganosiloxane ayant au moins un groupe hydrocarboné à insaturation aliphatique, au moins un groupe hydrolysable, et au moins un groupe à fonctionnalité époxy par molécule et un alcoxysilane à fonctionnalité époxy ; F-2) une combinaison d'un polyorganosiloxane ayant au moins un groupe hydrocarboné à insaturation aliphatique et au moins un groupe hydrolysable par molécule et d'un alcoxysilane à fonctionnalité époxy ; et F-3) une combinaison de F-1) et de F-2).

13. Composition selon la revendication 2, où le solvant est présent, et le solvant est choisi parmi : des polyalkylsiloxanes, des alcools, des cétones, des hydrocarbures aromatiques, des hydrocarbures aliphatiques, des éthers de glycol, le tétrahydrofurane, des essences minérales, du naphta, ou une combinaison de ceux-ci.

14. Procédé de préparation d'une doublure antiadhésive comprenant un revêtement antiadhésif sur une surface d'un substrat, le procédé comprenant :
facultativement le traitement d'une surface d'un substrat,
1) l'application d'une composition selon l'une quelconque des revendications précédentes sur la surface du substrat,
facultativement 2) le retrait du solvant, lorsqu'il est présent ;
3) le durcissement de la composition pour former le revêtement antiadhésif sur la surface du substrat.

15. Procédé selon la revendication 14, où la composition est appliquée en quantité suffisante pour obtenir un poids de couche du revêtement antiadhésif de 0,97 g/m² à 1,3 g/m².

16. Doublure antiadhésive préparée par le procédé selon la revendication 14.

17. Doublure antiadhésive selon la revendication 16, où la doublure antiadhésive a une résistance à l'adhésion prolongée > 80 % telle que mesurée par la méthode de test dans l'exemple de référence 2 (4) et une force de décollement < 3,0 g/pouce telle que mesurée par la méthode de test dans l'exemple de référence 2 (2).

18. Utilisation de la doublure antiadhésive selon la revendication 17 pour un article adhésif sensible à la pression en silicone dans une application de dispositif électronique.

19. Utilisation selon la revendication 18, où le dispositif électronique comprend un panneau tactile auquel l'article adhésif sensible à la pression est appliqué.
